# EUROPEAN PATENT APPLICATION

(11) **EP 4 632 891 A1**
(43) Date of publication of application: **15.10.2025**
(21) Application number: 24852139.5
(22) Date of filing: 25.07.2024
(51) Int. Cl.: H01M 50/143, H01M 50/105

(54) **POUCH-TYPE SECONDARY BATTERY WITH IMPROVED SAFETY**

(30) Priority: 07.08.2023 KR 20230103196; 19.06.2024 KR 20240079945
(71) Applicant: LG Energy Solution, Ltd., Seoul 07335 (KR)
(72) Inventor: KANG, Gyung Soo, Daejeon 34122 (KR); YU, Hyung Kyun, Daejeon 34122 (KR)
(74) Representative: Plasseraud IP
(86) International application number: PCT/KR2024/010845
(87) International publication number: WO 2025/033783

(57) **Abstract**

The present disclosure relates to a pouch type secondary battery with improved safety. Specifically, the pouch type secondary battery includes a pouch type battery case accommodating an electrode assembly and an electrolyte, and an explosion-prevention member formed to surround a portion of a perimeter of the pouch type battery case, wherein the explosion-prevention member may include an elastic band having a ring shape and surrounding the portion of the perimeter of the pouch type battery case and a scratch-inducing chip disposed between the pouch type battery case and the elastic band.

## Description

### TECHNICAL FIELD

### Cross-reference to Related Applications

This application claims priority from Korean Patent Application Nos. 10-2023-0103196, filed on August 7, 2023, and 10-2024-0079945, filed on June 19, 2024, the disclosures of which are incorporated by reference herein.

### Technical Field

The present disclosure relates to a pouch type secondary battery with improved safety, and particularly, to a pouch type secondary battery including an explosion-prevention member, which may cause electrolyte solution leakage by damaging an outer surface of a swollen pouch case, so as to prevent explosion during abnormal behavior of the secondary battery.

### BACKGROUND ART

Recently, as development and distribution of electric vehicles, batteries for energy storage, robots, or satellites are in full swing, research on high-performance secondary batteries capable of being repeatedly charged and discharged is being actively conducted, and typically, lithium secondary batteries, which may be freely charged and discharged due to almost no memory effect, have a very low self-discharge rate, and have high energy density, are receiving attention.

However, since the lithium secondary battery stores a lot of energy, there is a risk of fire or explosion due to internal resistance and external impact. Particularly, since a secondary battery with low physical durability, such as a pouch type secondary battery, is vulnerable to the internal resistance and external impact, it has a greater risk of ignition or explosion than a can type secondary battery. Also, recently, as secondary batteries are used in electric vehicles, the secondary batteries are often used as a battery pack containing multiple battery cells rather than as a single battery cell, wherein, since this battery pack has higher capacity or higher output than the single battery cell, the risk of ignition or explosion is greater, and, in a case in which the ignition or explosion occurs, the risk is inevitably greater.

There are various causes for the ignition or explosion of the secondary battery, wherein one of which is a case where an overcurrent exceeding a limit flows through the secondary battery when used for a long time or at high temperatures. Since the secondary battery generates heat when the overcurrent flows, internal temperature of the battery is rapidly increased and a liquid electrolyte changes into a gas due to the increase in the internal temperature of the battery, and accordingly, a so-called swelling phenomenon occurs in which a pouch type battery case swells due to an increase in internal pressure of the battery. Since a battery portion is deformed due to this swelling phenomenon, a short circuit of the battery occurs or explosion is caused.

Conventionally, in order to solve this problem of internal gas generation in the secondary battery, techniques have been proposed to remove internal gas by installing a separate safety valve or the like in the battery pack. However, the inventions as described above have problems, for example, a structure itself is different from that of the original battery or pack, a process for fabricating a separate part is required, and a separate case rather than a conventional case must be prepared.

Thus, research has continued to ensure safety of the secondary battery by preventing the ignition and explosion of the secondary battery during abnormal behavior of the lithium secondary battery.

### DISCLOSURE OF THE INVENTION

### TECHNICAL PROBLEM

An aspect of the present disclosure provides a pouch type secondary battery capable of ensuring safety by including an explosion-prevention member which may cause electrolyte solution leakage by damaging an outer surface of a pouch type battery case during abnormal behavior of the secondary battery.

### TECHNICAL SOLUTION

[1] The present disclosure provides a pouch type secondary battery including a pouch type battery case accommodating an electrode assembly and an electrolyte, and
   an explosion-prevention member formed to surround a portion of a perimeter of the pouch type battery case,
   wherein the explosion-prevention member includes an elastic band having a ring shape and surrounding the portion of the perimeter of the pouch type battery case and a scratch-inducing chip disposed between the pouch type battery case and the elastic band.
[2] The present disclosure provides the pouch type secondary battery of [1] above, wherein the elastic band includes at least one elastic band.
[3] The present disclosure provides the pouch type secondary battery of [1] or [2] above, wherein the elastic band is positioned at an exact center of the pouch type battery case.
[4] The present disclosure provides the pouch type secondary battery of at least one of [1] to [3] above, wherein the elastic band includes at least two elastic bands, and the at least two elastic bands are spaced apart from each other or cross each other.
[5] The present disclosure provides the pouch type secondary battery of at least one of [1] to [4] above, wherein the elastic bands are positioned symmetrically on both sides of an exact center of the pouch type battery case.
[6] The present disclosure provides the pouch type secondary battery of at least one of [1] to [5] above, wherein the elastic band is formed of a shape memory polymer.
[7] The present disclosure provides the pouch type secondary battery of at least one of [1] to [6] above, wherein the shape memory polymer includes at least one of fluorinated ethylene propylene (FEP), polytetrafluoroethylene (PTFE), polyolefin, polyvinyl chloride (PVC), polyvinylidene fluoride (PVDF), silicone rubber, and fluoropolymer elastomer.
[8] The present disclosure provides the pouch type secondary battery of at least one of [1] to [7] above, wherein a spacing between the pouch type battery case and the elastic band is in a range of 0 µm to 40 µm.
[9] The present disclosure provides the pouch type secondary battery of at least one of [1] to [8] above, wherein a minor axis width (W) of the elastic band is in a range of 10 mm to 40 mm.
[10] The present disclosure provides the pouch type secondary battery of at least one of [1] to [9] above, wherein the scratch-inducing chip is formed of a metal or a thermoplastic resin.
[11] The present disclosure provides the pouch type secondary battery of at least one of [1] to [10] above, wherein the metal is at least one of aluminum, steel, and stainless steel.
[12] The present disclosure provides the pouch type secondary battery of at least one of [1] to [11] above, wherein the thermoplastic resin is at least one selected from the group consisting of fluorinated ethylene propylene (FEP), polytetrafluoroethylene (PTFE), polyvinyl chloride (PVC), polyvinylidene fluoride (PVDF), fiber reinforced plastic (FRP), polypropylene (PP), polyethylene (PE), polycarbonate (PC), and polyamide imide (PAI).
[13] The present disclosure provides the pouch type secondary battery of at least one of [1] to [12] above, wherein the scratch-inducing chip has a cylindrical, rectangular, spherical, or bullet shape.
[14] The present disclosure provides the pouch type secondary battery of at least one of [1] to [13] above, wherein, in a case in which the scratch-inducing chip has the spherical shape, a diameter of the scratch-inducing chip is in a range of 1 mm to 10 mm.
[15] The present disclosure provides the pouch type secondary battery of at least one of [1] to [14] above, wherein, in a case in which the scratch-inducing chip has the cylindrical, rectangular, or bullet shape, a height of the scratch-inducing chip is in a range of 5 µm to 40 µm.
[16] The present disclosure provides the pouch type secondary battery of at least one of [1] to [15] above, wherein a diameter or width of the scratch-inducing chip is equal to a minor axis width of the elastic band or is 10% to 70% smaller than the minor axis width of the elastic band.
[17] The present disclosure provides the pouch type secondary battery of at least one of [1] to [16] above, wherein the scratch-inducing chip is adhered and fixed to an inner surface of the elastic band that faces the pouch type battery case.

### ADVANTAGEOUS EFFECTS

According to the present disclosure, since an explosion-prevention member is formed on an outer surface of a pouch type battery case to surround a portion of a perimeter of the pouch type battery case as described above, electrolyte leakage may be caused by damaging the outer surface of the pouch type battery case when a swelling phenomenon occurs because an internal pressure of a secondary battery is increased due to long-term use or abnormal behavior caused by high temperature. As a result, since a possibility of ignition or explosion of the secondary battery may be significantly reduced by suppressing movement of lithium ions to decrease energy of the secondary battery, safety of the battery may be ensured.

### BRIEF DESCRIPTION OF THE DRAWINGS

FIG. 1 is a plan view of a pouch type secondary battery using an elastic band which is formed according to an embodiment of the present disclosure.
FIG. 2 is a front view of the pouch type secondary battery using the elastic band which is formed according to the embodiment of the present disclosure.
FIG. 3 is a front view of a pouch type secondary battery including an explosion-prevention member which is formed according to an embodiment of the present disclosure.
FIG. 4 is a conceptual view illustrating a principle of damaging a pouch type battery case by the explosion-prevention member during abnormal behavior of the secondary battery.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

Hereinafter, the present disclosure will be described in more detail.

A pouch type secondary battery according to the present disclosure includes at least one of configurations disclosed below, and may include any combination between technically possible configurations among the configurations below.

Specifically, the pouch type secondary battery according to the present disclosure includes
a pouch type battery case accommodating an electrode assembly and an electrolyte, and
an explosion-prevention member formed to surround a portion of a perimeter of the pouch type battery case,
wherein the explosion-prevention member includes an elastic band having a ring shape and surrounding the portion of the perimeter of the pouch type battery case and a scratch-inducing chip disposed between the pouch type battery case and the elastic band.

That is, the pouch type secondary battery according to the present disclosure has a structure in which, in a case in which an internal pressure of the battery is increased due to generation of flammable/volatile gas as an electrolyte solution is decomposed due to abnormal behavior (operation) in the battery which is caused by high-temperature storage or the like, i.e., in a case in which a swelling phenomenon occurs at a center of the pouch type battery case, the explosion-prevention member surrounding the perimeter of the pouch type battery case, for example, the elastic band having a ring shape and the scratch-inducing chip etch and/or damage an outer surface of the pouch type battery case, while moving from the relatively thin center of the pouch type battery case toward both ends, to cause leakage of the electrolyte. As described above, since the battery does not operate as movement of lithium ions is decreased if the electrolyte leaks out of the battery case, a possibility of ignition or explosion of the secondary battery is significantly reduced, and thus, safety may be ensured. Furthermore, in a case in which at least one pouch type secondary battery of the present disclosure is included in a battery pack regardless of its position, the safety of the secondary battery may be promoted as heat and/or temperature transfer to an adjacent pouch type secondary battery is delayed by the explosion-prevention member.

Hereinafter, a configuration of the pouch type secondary battery of the present disclosure will be described in detail with reference to the drawings, but this is for easier understanding of the present disclosure, and the scope of the present disclosure is not limited thereto.

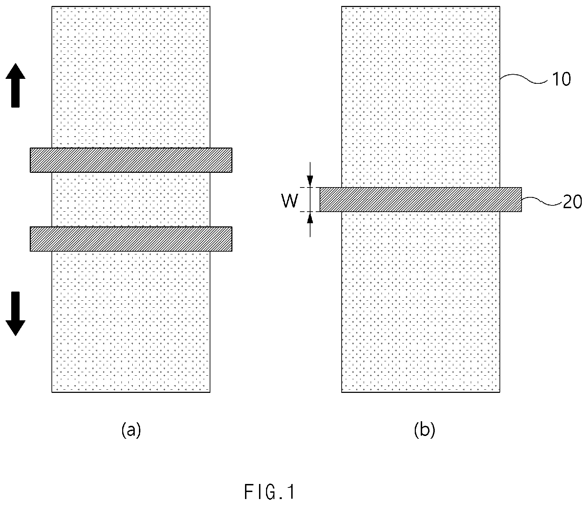

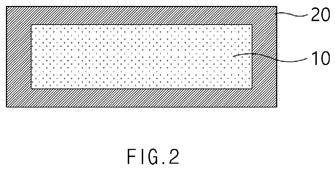

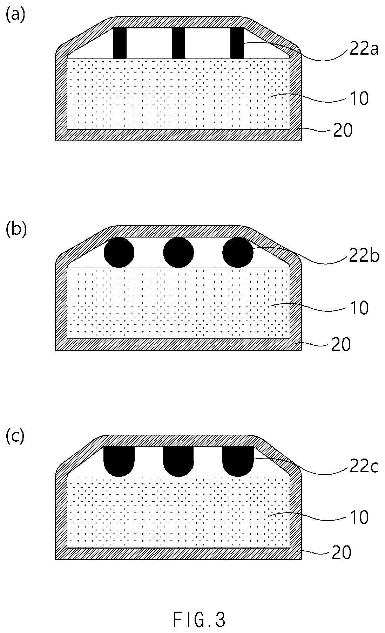

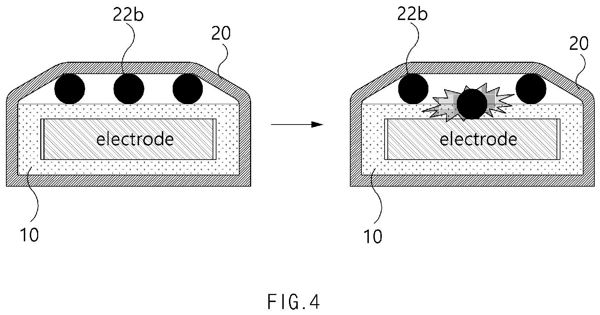

A plan view of a pouch type secondary battery using an elastic band which is formed according to an embodiment of the present disclosure is schematically illustrated in FIG. 1, a front view of the pouch type secondary battery using the elastic band which is formed according to the embodiment of the present disclosure is schematically illustrated in FIG. 2, and a front view of a pouch type secondary battery including an explosion-prevention member which is formed according to an embodiment of the present disclosure is schematically illustrated in FIG. 3. Also, a conceptual view illustrating a principle of damaging a pouch type battery case by the explosion-prevention member during abnormal behavior of the secondary battery is illustrated in FIG. 4.

Referring to FIGS. 1 to 3, the pouch type secondary battery of the present disclosure includes a pouch type battery case 10 accommodating an electrode assembly (not shown) and an electrolyte (not shown) and an explosion-prevention member 30 formed to surround a portion of a perimeter of the pouch type battery case. The explosion-prevention member 30 may include an elastic band 20 and scratch-inducing chips 22a, 22b, and 22c.

Specifically, referring to FIGS. 1 and 2, the elastic band 20 used in the pouch type battery of the present disclosure may include one elastic band as in FIG. 1(b), and may specifically include at least two elastic bands as in FIG. 1(a).

In a case in which the elastic band includes at least two elastic bands, the elastic bands may be spaced apart from each other or may cross each other.

In a case in which the one elastic band is used, it is desirable that the elastic band is positioned at an exact center of the pouch type battery case. Also, in a case in which at least two, i.e., a plurality of elastic bands are used, the plurality of elastic bands may be positioned symmetrically to each other on both sides of the exact center, and, in this case, the elastic bands may be positioned within a range of about 5 mm to 100 mm, preferably, 10 mm to 50 mm, from the exact center of the pouch type battery case toward the both ends. In this case, spacings between the plurality of elastic bands may be the same or different from each other.

The elastic band may be formed of a shape memory polymer (SMP).

The shape memory polymer is a polymer material having a property of shrinking at a high temperature higher than a glass transition temperature, wherein representative examples thereof may be at least one of fluorinated ethylene propylene (FEP), polytetrafluoroethylene (PTFE), polyolefin, polyvinyl chloride (PVC), polyvinylidene fluoride (PVDF), silicone rubber, and fluoropolymer elastomer.

Also, a spacing between the pouch type battery case and the elastic band may be in a range of 40 µm or less, specifically, 0 µm to 40 µm.

In a case in which the spacing between the pouch type battery case and the elastic band is greater than 40 µm, since the spacing is significantly greater than a diameter or height of the scratch-inducing chip to be described later, the elastic band detaches from the pouch type battery case or moves away from its position before the pouch type battery swells, while a space between the pouch type battery case and the elastic band becomes wider, and, as a result, an effect of damaging the outer surface of the pouch type battery case during swelling of the battery may be insignificant. In this case, since the electrolyte leakage from the pouch type secondary battery is not induced during the abnormal behavior of the battery, an effect of suppressing ignition and/or explosion of the battery may be insignificant.

A minor axis width W of the elastic band may be in a range of about 10 mm to 40 mm, and may specifically be in a range of 10 mm to 20 mm.

In a case in which the minor axis width of the elastic band satisfies the above range, an effect of improving the safety of battery use may be secured through energy drain which occurs while damaging the pouch type case during the abnormal behavior of the battery. If the minor axis width of the elastic band is less than 10 mm, since the band may break due to inability to withstand the pressure when the pouch type secondary battery swells or the scratch-inducing chip may be easily detached, the effect of improving the safety of the secondary battery may be insignificant. Also, if the minor axis width of the elastic band is greater than 40 mm, since sufficient force is not transmitted to the pouch type case, a degree of damage to the pouch type case during the swelling is insignificant, and thus, the effect of improving the safety of the secondary battery may be reduced.

Also, referring to FIG. 3, in the pouch type secondary battery of the present disclosure, the scratch-inducing chips 22a, 22b, and 22c may be disposed on the inner surface of the elastic band which faces a surface of the pouch type battery case so as to damage the outer surface (surface) of the pouch type battery case when the pouch type secondary battery swells due to the increase in the internal pressure of the pouch type secondary battery.

The scratch-inducing chip may be formed of a metal or thermoplastic resin having a higher strength than a pouch film constituting the pouch type battery case.

The metal may include at least one of aluminum, steel, and stainless steel. Also, the thermoplastic resin may include at least one selected from the group consisting of fluorinated ethylene propylene (FEP), polytetrafluoroethylene (PTFE), polyvinyl chloride (PVC), polyvinylidene fluoride (PVDF), fiber reinforced plastic (FRP), polypropylene (PP), polyethylene (PE), polycarbonate (PC), and polyamide imide (PAI).

A shape of the scratch-inducing chip is not particularly limited, but the scratch-inducing chip may have a cylindrical, rectangular (22a), spherical (22b), or bullet (22c) shape so as to easily move with the elastic band and easily etch or damage the outer surface (surface) of the pouch type battery case while scratching it. Specifically, the scratch-inducing chip may have a rectangular, spherical or bullet shape, or may have a rectangular or spherical shape.

In a case in which the scratch-inducing chip has a spherical shape (22b), a diameter of the scratch-inducing chip may be in a range of about 1 mm to 10 mm, specifically, 1 mm to 5 mm.

Also, in a case in which the scratch-inducing chip has a cylindrical, rectangular (22a), or bullet (22c) shape, a height of the scratch-inducing chip may be in a range of 5 µm to 40 µm, specifically, 15 µm to 40 µm.

That is, in a case in which the diameter or height of the scratch-inducing chip satisfies the above range, since the effect of improving the safety through the energy drain may be achieved by damaging the pouch type case during the abnormal behavior of the battery. In this case, a crack may start and propagate from an outermost layer of the pouch type case to cause damage to the pouch even if a diameter or height of a scratch-inducing chip is small at less than 1 mm or less than 5 µm, but for a more effective operation, it is desirable that the diameter or height of the scratch-inducing chip may be the same as or may be relatively higher than a height of a base material layer to be described later which is the outermost layer of the pouch type case.

Also, in a case in which the scratch-inducing chip has a cylindrical, rectangular (22a) or bullet (22c) shape, it is desirable that a diameter or width of the scratch-inducing chip is equal to the minor axis width of the elastic band or is about 10% to 70% smaller than the minor axis width of the elastic band so that the scratch-inducing chip may move together at the same speed and in the same direction without being easily detached and/or separated from the elastic band.

If, in a case in which the diameter or width of the scratch-inducing chip is somewhat larger than the width of the elastic band, a total weight of the battery may be increased due to an increase in volume and weight of the scratch-inducing chip, and, as a result, battery energy density may be decreased, and it may not be easy to move the scratch-inducing chip at the same speed and in the same direction as the elastic band. Also, in a case in which the diameter or width of the scratch-inducing chip is somewhat smaller than the width of the elastic band, since it is not only not easy to move the scratch-inducing chip at the same speed and in the same direction as the elastic band, but also the sufficient force is not transmitted to the pouch type case, the degree of damage to the pouch type case during the swelling is reduced, and thus, the effect of improving the safety of the secondary battery may be insignificant.

Furthermore, the scratch-inducing chip may be adhered and fixed to the inner surface of the elastic band that faces the outer surface of the pouch type battery case so that the scratch-inducing chip may move together with the elastic band at the same speed and in the same direction when the secondary battery swells.

Specifically, the scratch-inducing chip may be adhered and fixed to the inner surface of the elastic band using an acryl-based adhesive, an epoxy-based adhesive, a silicone-based adhesive, or a urethane-based adhesive.

As described above, with respect to the pouch type secondary battery of the present disclosure, in a case in which the center of the pouch type battery case swells due to the increase in the internal pressure of the battery due to long-term use of the battery or gas generation caused by the abnormal behavior (operation) in the battery at high temperatures, the explosion-prevention member surrounding the perimeter of the pouch type battery case breaks and damages the outer surface of the pouch type battery case using the scratch-inducing chip as illustrated in FIG. 4, while moving from the center of the pouch type secondary battery toward the relatively thin end surface (side) of the pouch type secondary battery, to cause the leakage of the electrolyte in the pouch type battery case. As a result, since energy of the secondary battery is decreased (drained) to stop the operation of the secondary battery, ignition and explosion of the secondary battery may be prevented and suppressed.

A lower case, in which a pocket portion capable of accommodating the electrode assembly and the electrolyte is formed, and an upper case for covering the lower case are formed symmetrically in the pouch type battery case used in the present disclosure. Overlapping edges of the lower case and the upper case must be sealed.

Specifically, the pouch type battery case is composed of a pouch film laminate including a gas barrier layer (not shown), a base material layer (not shown) disposed on one surface of the gas barrier layer, and a sealant layer (not shown) disposed on the other surface of the gas barrier layer.

The base material layer is disposed as an outermost layer of the battery case to protect the electrode assembly from external impact and electrically insulate the electrode assembly, wherein it may be formed of at least one polymer material selected from the group consisting of polyethylene, polypropylene, polycarbonate, polyethylene terephthalate, polyvinyl chloride, acrylic polymer, polyacrylonitrile, polyimide, polyamide, cellulose, aramid, Nylon, polyester, polyparaphenylene benzobisoxazole, polyarylate, and Teflon.

Also, the gas barrier layer is used to secure mechanical strength of the battery case, block incoming and outgoing of gas or moisture from the outside of the secondary battery, and prevent the leakage of the electrolyte. The gas barrier layer may be formed of a metallic material, and may specifically be formed of an aluminum alloy thin film.

The sealant layer is used to seal the battery case by being bonded through hot pressing, wherein it is disposed as an innermost layer of the pouch film laminate.

Since the sealant layer is a surface which is in direct contact with the electrolyte and the electrode assembly after being formed into the battery case, it must have insulation properties and corrosion resistance, and, since the sealant layer completely seals the inside of the battery case to block material movement between the inside and the outside, it must have high sealing properties. Specifically, the sealant layer may be formed of at least one polymer selected from the group consisting of polyethylene, polypropylene, polycarbonate, polyethylene terephthalate, polyvinyl chloride, acrylic polymer, polyacrylonitrile, polyimide, polyamide, cellulose, aramid, Nylon, polyester, polyparaphenylene benzobisoxazole, polyarylate, and Teflon, and among them, it is particularly desirable to include polypropylene (PP) which has excellent mechanical properties, such as tensile strength, stiffness, surface hardness, wear resistance, and heat resistance, and excellent chemical properties such as corrosion resistance.

In this case, the base material layer may have a thickness of 10 µm to 50 µm, specifically, 12 µm to 40 µm. In a case in which the thickness of the base material layer satisfies the above numerical range, the base material layer may not be damaged even when sufficient heat is applied to the sealant layer for sealing, and may have excellent insulation properties. Also, the gas barrier layer may have a thickness of 20 µm to 80 µm, particularly 20 µm to 65 µm, and more particularly 30 µm to 60 µm. In a case in which the thickness of the gas barrier layer satisfies the above numerical range, the gas barrier layer may not be damaged during a sealing process and may have excellent insulation properties. Furthermore, the sealant layer may have a thickness of 40 µm to 80 µm, particularly 50 µm to 80 µm, and more particularly 60 µm to 80 µm. In a case in which the thickness of the sealant layer satisfies the above numerical range, since the sealant layer does not easily melt during the sealing process and is supplied with sufficient heat energy, a modulus of the sealant layer may be effectively reduced. In addition, if the thicknesses of the base material layer, the gas barrier layer, and the sealant layer respectively satisfy the above ranges, since the pouch is easily damaged by the scratch-inducing chip during the abnormal behavior of the battery, the effect of improving the safety of the battery may be obtained.

Also, a conventional electrode assembly used in a lithium secondary battery, for example, an electrode assembly having a structure in which negative electrode/separator/positive electrode/separator/negative electrode are laminated may be used as the electrode assembly usable in the pouch type secondary battery of the present disclosure, and the above electrode assembly may be used by freely setting the numbers of positive electrodes and negative electrodes. A stacked type, a stack and folding type, or a jelly-roll-type electrode assembly may all be used as the above electrode assembly.

Furthermore, various electrolytes usable in a lithium secondary battery may be used as the electrolyte used in the present disclosure, and types thereof are not particularly limited. Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 5.0 M, preferably, 0.1 M to 3.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, an additive may be further included in the electrolyte in addition to the above electrolyte components. For example, as the additive, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be used alone or in a mixture thereof, but the present disclosure is not limited thereto. The additive may be included in an amount of 0.1 wt% to 10 wt%, preferably, 0.1 wt% to 5 wt% based on a total weight of the electrolyte.

Although the present disclosure has been described with reference to the drawings according to embodiments of the present disclosure, those of ordinary skill in the art to which the present disclosure pertains will be able to make various applications and modifications within the scope of the present disclosure based on the above contents.

Hereinafter, the present disclosure will be described in more detail through specific examples.

### Examples

### Preparation Example.

### (Pouch Type Battery Case Preparation)

After 25 µm thick Nylon 6 and 12 µm polyethylene terephthalate (PET) were dry-laminated on a surface of a 60 µm thick aluminum foil to laminate the Nylon on the aluminum layer, an 80 µm thick polypropylene was laminated on the other side surface of the aluminum layer on which the Nylon was laminated to prepare an aluminum pouch film. Subsequently, the aluminum pouch film was disposed in a forming device and formed to prepare a pouch type battery case.

### (Pouch Type Secondary Battery Preparation)

LiCoO₂ as a positive electrode active material, carbon black as a conductive agent, and PVDF, as a binder, were added to N-methyl-2-pyrrolidone (NMP), as a solvent, at a weight ratio of 94:3:3 to prepare a positive electrode mixture slurry (solid content 65 wt%). About a 20 µm thick aluminum (Al) thin film, as a positive electrode collector, was coated with the positive electrode mixture slurry, dried, and then roll-pressed to prepare a positive electrode.

Subsequently, carbon powder as a negative electrode active material, PVDF as a binder, and carbon black, as a conductive agent, were added to NMP, as a solvent, at a weight ratio of 96:3:1 to prepare a negative electrode mixture slurry (solid content 75 wt%). A 10 µm thick copper (Cu) thin film, as a negative electrode collector, was coated with the negative electrode mixture slurry, dried, and then roll-pressed to prepare a negative electrode.

Subsequently, after a 20 µm thick polyethylene (PE) separator was disposed between the above-prepared electrodes and wound and pressed to prepare an electrode assembly, the electrode assembly was inserted into the above-prepared pouch type battery case, and an electrolyte (EC:DMC = 30:70 volume ratio, 1 M LiPF₆, 0.5% vinylene carbonate, and 0.5% 1,3-propane sultone) was injected to prepare a pouch type secondary battery.

### Example 1.

An elastic band with a width (w) of 10 mm was prepared by using polytetrafluoroethylene (PTFE).

Subsequently, after one elastic band prepared above was disposed at an exact center of the pouch type secondary battery prepared in Preparation Example, three rectangular scratch-inducing chips (width: 5 mm, height: 40 µm) were inserted between a surface of the pouch type secondary battery and the elastic band to prepare an explosion-prevention member (see FIGS. 1(b) and 3(a)).

### Example 2.

An elastic band with a width (w) of 50 mm was prepared by using polytetrafluoroethylene (PTFE).

Subsequently, after one elastic band prepared above was disposed at the exact center of the pouch type secondary battery prepared in Preparation Example, three rectangular scratch-inducing chips (width: 5 mm, height: 40 µm) were inserted between the surface of the pouch type secondary battery and the elastic band to prepare an explosion-prevention member (see FIGS. 1(b) and 3(a)).

### Example 3.

An elastic band with a width (w) of 50 mm was prepared by using polytetrafluoroethylene (PTFE).

Subsequently, after one elastic band prepared above was disposed at the exact center of the pouch type secondary battery prepared in Preparation Example, two spherical scratch-inducing chips (diameter: 2 mm) formed of fluorinated ethylene propylene (FEP) were inserted between the surface of the pouch type secondary battery and the elastic band to prepare an explosion-prevention member (see FIGS. 1(b) and 3(b)).

### Experimental Example 1: Time Delay Evaluation of Thermal Propagation

After five of each of the pouch type secondary batteries respectively including the explosion-prevention members prepared in Examples 1 to 3 and the pouch type secondary battery not including the explosion-prevention member of Preparation Example were prepared as one module, heat was applied to one outermost pouch type secondary battery at a rate of 0.5°C/sec using a heating pad. Then, heat of the adjacent pouch type secondary battery was measured using a thermocouple to evaluate whether or not there was a time delay in heat propagation.

### Experimental Example 2: Safety Evaluation of Physical Impact

After each of the pouch type secondary batteries respectively including the explosion-prevention members prepared in Examples 1 to 3 and the pouch type secondary battery not including the explosion-prevention member of Preparation Example was fully-charged at a current of 0.2 C to 4.4 V in a constant current-constant voltage mode, a rod having a diameter of 15.8 mm was freely dropped from a height of 6.1 cm onto the center of the secondary battery to measure whether or not the pouch type secondary battery was ignited. The above experiment was repeated 10 times, and the results thereof are then presented in Table 1 below.

### Experimental Example 3: Safety Evaluation During Nail Penetration

After each of the pouch type secondary batteries respectively including the explosion-prevention members prepared in Examples 1 to 3 and the pouch type secondary battery not including the explosion-prevention member of Preparation Example was fully-charged to a state of charge (SOC) of 100% at a current of 0.2 C to 4.4 V in a constant current-constant voltage mode, the presence of ignition of the pouch type secondary battery was measured by performing a nail penetration test in which a nail having a diameter of 3 mm was used to penetrate each pouch type secondary battery at a speed of 0.1 mm/s. The above test was repeated 10 times, and the results thereof are then presented in Table 1 below.

**[Table 1]**

| | Time delay effect on heat propagation | Safety evaluation of physical impact | Safety evaluation during nail penetration |
|---|---|---|---|
| Example 1 | ○ | ○ | Δ |
| Example 2 | Δ | ○ | Δ |
| Example 3 | Δ | ○ | Δ |
| Preparation Example | × | Δ | Δ |

In Table 1, the mark "o" indicates good, wherein it means that there was little heat transfer or ignition and explosion were hardly induced.

The mark "Δ" indicates average, wherein it means that no ignition or explosion occurred in 5 or less of 10 test specimens.

The mark "×" indicates poor, wherein it means that ignition and explosion occurred in most of the 10 test specimens.

Referring to Table 1, with respect to the pouch type secondary batteries of Examples 1 to 3, it may be confirmed that time delay effect on heat propagation, safety against physical impact, and safety during nail penetration were all better than those of the pouch type secondary battery of Preparation Example which did not include the explosion-prevention member.

### Description of the Symbols

10: Pouch Type Secondary Battery
20: Elastic Band
22a, 22b, 22c: Scratch-Inducing Chips
30: Explosion-Prevention Member

## Claims

1. A pouch type secondary battery comprising:
a pouch type battery case accommodating an electrode assembly and an electrolyte, and
an explosion-prevention member formed to surround a portion of a perimeter of the pouch type battery case,
wherein the explosion-prevention member comprises an elastic band having a ring shape and surrounding the portion of the perimeter of the pouch type battery case and a scratch-inducing chip disposed between the pouch type battery case and the elastic band.

2. The pouch type secondary battery of claim 1, wherein the elastic band comprises at least one elastic band.

3. The pouch type secondary battery of claim 1, wherein the elastic band is positioned at an exact center of the pouch type battery case.

4. The pouch type secondary battery of claim 1, wherein the elastic band comprises at least two elastic bands, and the at least two elastic bands are spaced apart from each other or cross each other.

5. The pouch type secondary battery of claim 4, wherein the elastic bands are positioned symmetrically on both sides of an exact center of the pouch type battery case.

6. The pouch type secondary battery of claim 1, wherein the elastic band is formed of a shape memory polymer.

7. The pouch type secondary battery of claim 6, wherein the shape memory polymer comprises at least one of fluorinated ethylene propylene (FEP), polytetrafluoroethylene (PTFE), polyolefin, polyvinyl chloride (PVC), polyvinylidene fluoride (PVDF), silicone rubber, and fluoropolymer elastomer.

8. The pouch type secondary battery of claim 1, wherein a spacing between the pouch type battery case and the elastic band is in a range of 0 µm to 40 µm.

9. The pouch type secondary battery of claim 1, wherein a minor axis width (W) of the elastic band is in a range of 10 mm to 40 mm.

10. The pouch type secondary battery of claim 1, wherein the scratch-inducing chip is formed of a metal or a thermoplastic resin.

11. The pouch type secondary battery of claim 10, wherein the metal is at least one of aluminum, steel, and stainless steel.

12. The pouch type secondary battery of claim 10, wherein the thermoplastic resin is at least one selected from the group consisting of fluorinated ethylene propylene (FEP), polytetrafluoroethylene (PTFE), polyvinyl chloride (PVC), polyvinylidene fluoride (PVDF), fiber reinforced plastic (FRP), polypropylene (PP), polyethylene (PE), polycarbonate (PC), and polyamide imide (PAI).

13. The pouch type secondary battery of claim 1, wherein the scratch-inducing chip has a cylindrical, rectangular, spherical, or bullet shape.

14. The pouch type secondary battery of claim 13, wherein, in a case in which the scratch-inducing chip has the spherical shape, a diameter of the scratch-inducing chip is in a range of 1 mm to 10 mm.

15. The pouch type secondary battery of claim 13, wherein, in a case in which the scratch-inducing chip has the cylindrical, rectangular, or bullet shape, a height of the scratch-inducing chip is in a range of 5 µm to 40 µm.

16. The pouch type secondary battery of claim 15, wherein a diameter or width of the scratch-inducing chip is equal to a minor axis width of the elastic band or is 10% to 70% smaller than the minor axis width of the elastic band.

17. The pouch type secondary battery of claim 1, wherein the scratch-inducing chip is adhered and fixed to an inner surface of the elastic band that faces the pouch type battery case.
